# EUROPEAN PATENT APPLICATION

(11) **EP 4 679 896 A2**
(43) Date of publication of application: **14.01.2026**
(21) Application number: 24785351.8
(22) Date of filing: 05.04.2024
(51) Int. Cl.: H04W 40/24, H04L 41/0894, H04W 48/18, H04W 76/12, H04W 76/11

(54) **METHOD FOR RESOLVING INCONGRUITY BETWEEN TERMINAL ROUTE SELECTION POLICY AND SESSION INFORMATION**

(30) Priority: 06.04.2023 KR 20230045553
(71) Applicant: Samsung Electronics Co., Ltd., Suwon-si, Gyeonggi-do 16677 (KR)
(72) Inventor: LEE, Jicheol, Suwon-si Gyeonggi-do 16677 (KR); KIM, Dongyeon, Suwon-si Gyeonggi-do 16677 (KR); PARK, Jungshin, Suwon-si Gyeonggi-do 16677 (KR); SUH, Dongeun, Suwon-si Gyeonggi-do 16677 (KR)
(74) Representative: Gulde & Partner
(86) International application number: PCT/KR2024/004574
(87) International publication number: WO 2024/210654

(57) **Abstract**

The present disclosure relates to a 5G or 6G communication system for supporting higher data transmission rates. An operation method of a user equipment (UE) based on a UE route selection policy (URSP), according to one embodiment of the present disclosure, may comprise the operations of: transmitting, to a mobility management entity (MME), a first message (attach request) including at least one of a first indicator (URSI) indicating support for reporting URSP-associated session information and a second indicator (UERSI) indicating support for a URSP enforcement report; receiving, from the MME, a second message (EPS bearer context request) including a URSP rule; and transmitting, to the MME, a third message (PDN connectivity request) including at least one of the URSP-associated session information and the URSP enforcement report.

## Description

### [Technical Field]

The disclosure relates to a wireless communication system and, more particularly, to a method for identifying whether a UE follows a UE route selection policy (URSP) in a cellular wireless communication system (5G system).

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The 3GPP, which is in charge of cellular mobile communication standards, has named a new core network structure 5G core (5GC) and is standardizing the 5GC in order to evolve from an existing 4G LTE system to a 5G system.

The 5GC supports the following differentiated functions compared to the evolved packet core (EPC), which is the existing 4G network core.

First, a network slice function is introduced in the 5GC. According to a 5G requirement, the 5GC needs to support various types of UEs and services, for example, enhanced mobile broadband (eMBB), ultra-reliable low-latency communications (URLLC), and massive machine-type communications (mMTC). Each UE/service has different requirements in a core network. For example, an eMBB service requires a high data rate, while an URLLC service requires high stability and low latency. To satisfy various service requirements, network slicing is proposed.

Network slicing is a method of producing a plurality of logical networks by virtualization of one physical network, and each network slice instance (NSI) may have a different characteristic. Thus, each NSI may have a network function (NF) suitable for the characteristic thereof, thereby satisfying various service requirements. Accordingly, an NSI suitable for the characteristic of a required service may be allocated to each UE, thereby efficiently supporting various 5G services.

Second, the 5GC is able to easily support a network virtualization paradigm by separating a mobility management function and a session management function. In existing 4G LTE, all UEs are able to receive services from a network through signaling exchange with a single core device called a mobility management entity (MME) that is in charge of registration, authentication, mobility management, and session management functions. However, in 5G, as the number of UEs is explosively increasing and mobility and traffic/session characteristics to be supported are segmented according to the types of UEs, when a single device, such as an MME, supports all functions, scalability to add an entity for each required function is bound to decrease. Accordingly, various functions are being developed based on a structure in which a mobility management function and a session management function are separated in order to address complexity in function/implementation of a core device in charge of a control plane and to improve scalability in signaling load.

### [Detailed Description of the Invention]

### [Technical Problem]

When a 5GC-EPC interworking UE accesses an EPC and generates a packet data network (PDN) connection according to a UE route selection policy (URSP) rule in a network, the UE is unable to transmit single-network slice selection assistance information (S-NSSAI) matching the URSP to the network, and a PDN gateway control plane function (PGW-C)/session management function (SMF) may select associated S-NSSAI, based on an access point name (APN) transmitted by the UE when a PDN connectivity is generated.

Subsequently, when the UE moves to a 5GC network that supports a network slice, the PDN connectivity generated with the PGW-C/SMF provides seamless mobility to a protocol data unit (PDU) session of the 5GC network, and the UE uses a network slice for the S-NSSAI associated with the PDN connectivity generated in the EPC, in which the associated S-NSSAI may differ from an S-NSSAI value specified in the URSP rule transmitted to the UE.

The disclosure proposes a method for resolving inconsistency between an S-NSSAI value specified in a URSP rule and S-NSSAI assigned to a UE.

### [Technical Solution]

An operation method of a user equipment (UE) based on a UE route selection policy (URSP) in a wireless communication system according to an embodiment may include: transmitting, to a mobility management entity (MME), a first message (attach request) including at least one of a first indicator (URSI) indicating support for a report of URSP-associated session information and a second indicator (UERSI) indicating support for a URSP enforcement report; receiving a second message (EPS bearer context request) including a URSP rule from the MME; and transmitting, to the MME, a third message (PDN connectivity request) including at least one of the URSP-associated session information and the URSP enforcement report.

An operation method of a network entity (PGW-C/SMF) in a wireless communication system according to an embodiment may include: receiving, from a serving gateway (S-GW), a first message (create session request) including at least one of a first indicator (URSI) indicating support for a report of UE route selection policy (URSP)-associated session information and a second indicator (UERSI) indicating support for a URSP enforcement report; receiving a second message (create session request) including at least one of the URSP-associated session information and the URSP enforcement repot from the S-GW; and transmitting a third message (create session response) including single-network slice selection assistance information (S-NSSAI) to the S-GW.

A user equipment (UE) based on a UE route selection policy (URSP) in a wireless communication system according to an embodiment includes a transceiver and a controller. The controller may perform control to transmit, to a mobility management entity (MME), a first message (attach request) including at least one of a first indicator (URSI) indicating support for a report of URSP-associated session information and a second indicator (UERSI) indicating support for a URSP enforcement report, may receive a second message (EPS bearer context request) including a URSP rule from the MME, and may perform control to transmit, to the MME, a third message (PDN connectivity request) including at least one of the URSP-associated session information and the URSP enforcement report.

A network entity (PGW-C/SMF) in a wireless communication system according to an embodiment includes a transceiver and a controller. The controller may perform control to receive, from a serving gateway (S-GW), a first message (create session request) including at least one of a first indicator (URSI) indicating support for a report of UE route selection policy (URSP)-associated session information and a second indicator (UERSI) indicating support for a URSP enforcement report, receive a second message (create session request) including at least one of the URSP-associated session information and the URSP enforcement repot from the S-GW, and transmit a third message (create session response) including single-network slice selection assistance information (S-NSSAI) to the S-GW.

### [Advantageous Effects]

A method and a device according to an embodiment of the disclosure may resolve inconsistency between a slice selected by a UE supporting 5GC-EPC interworking according to a URSP rule and a slice assigned by a network to the UE.

### [Brief Description of Drawings]

FIG. 1 illustrates a 5G system network structure.
FIG. 2 is a diagram illustrating the concept of a UE route selection policy (hereinafter, "URSP").
FIG. 3 illustrates a 5GC-EPC scenario according to an embodiment of the disclosure.
FIGS. 4A, 4B, and 4C illustrate a procedure of receiving URSP-associated information about a UE in an EPC network and recovering slice inconsistency according to an embodiment of the disclosure.
FIGS. 5A, 5B, and 5C illustrate a procedure of receiving URSP-associated information about a UE after a move to a 5GC network and recovering slice inconsistency according to an embodiment of the disclosure.
FIG. 6 is a block diagram illustrating a structure of a UE according to an embodiment of the disclosure.
FIG. 7 is a block diagram illustrating a structure of a network entity according to an embodiment of the disclosure.
FIG. 8 is a flowchart illustrating the operation of a UE according to an embodiment of the disclosure.

### [Mode for Carrying out the Invention]

Hereinafter, embodiments of the disclosure will be described in detail in conjunction with the accompanying drawings. Also, in describing the disclosure, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals. The advantages and features of the technical idea according to the disclosure and ways to achieve them will be apparent by making reference to embodiments as described below in detail in conjunction with the accompanying drawings. However, the disclosure is not limited to the embodiments set forth below, but may be implemented in various different forms. The embodiments of the disclosure are provided only to completely disclose the disclosure and inform those skilled in the art of the scope of the disclosure, and the disclosure is defined only by the scope of the appended claims. Throughout the specification, the same or like reference signs indicate the same or like elements. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of an eNode B, a Node B, a base station (BS), a radio access network (RAN), an access network (AN), a RAN node, a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" may refer to a radio link via which a base station transmits a signal to a terminal, and an "uplink (UL)" may refer to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, or other similar services. In addition, based on determinations by those skilled in the art, the embodiments of the disclosure may be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

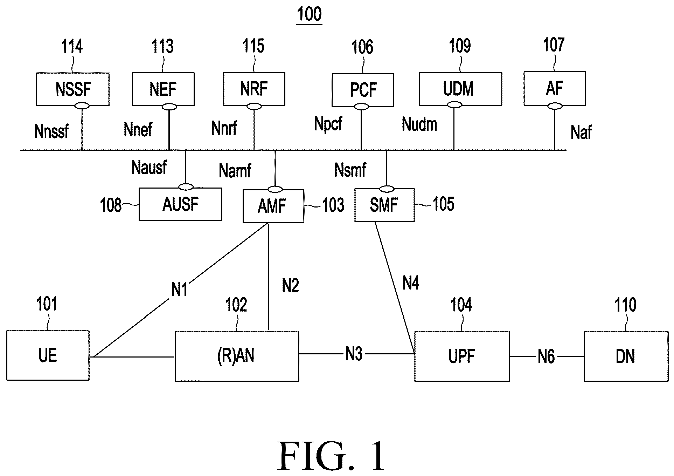

FIG. 1 illustrates a 5G system network structure.

FIG. 1 illustrates a network structure and interfaces of a 5G system 100 according to an embodiment of the disclosure.

Network entities included in the network structure of the 5G system in FIG. 1 may include network functions (NFs), depending on system implementations.

Referring to FIG. 1, the network structure of the 5G system 100 may include various network entities. For example, the 5G system 100 may include an authentication server function (AUSF) 108, an access and mobility management function (AMF) 103, a session management function (SMF) 105, a policy control function (PCF) 106, an application function (AF) 107, a unified data management (UDM) 109, a data network (DN) 110, a network exposure function (NEF) 113, a network slicing selection function (NSSF) 114, a network repository function (NRF) 115, an edge application service domain repository (EDR, not illustrated), an edge application server (EAS, not illustrated), an EAS discovery function (EASDF, not illustrated), a user plane function (UPF) 104, a (radio) access network (R)AN) 102, and a terminal, that is, a user equipment (UE) 101.

The respective NFs of the 5G system 100 support the following functions.

The AUSF 108 processes and stores data for authentication of the UE 101.

The AMF 103 may provide a function for access and mobility management on a per-UE basis, and basically, one UE may be connected to one AMF 103. The AMF 103 may support functions such as signaling between CN nodes for mobility between 3GPP access networks, radio access network (RAN) CP interface (i.e., N2 interface) termination, non-access stratum (NAS) signaling termination (N1), NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, network slicing support, SMF selection, lawful intercept (LI) (for an AMF event and an interface to an LI system), delivery of session management (SM) messages between the UE and the SMF, a transparent proxy for session management (SM) message routing, access authentication, access authorization including roaming permission checking, delivery of SMS messages between the UE and a short message service function (SMSF), a security anchor function (SAF), and/or security context management (SCM). Some or all of the functions of the AMF 103 may be supported within a single instance of one AMF.

The DN 110 refers to, for example, an operator service, Internet access, a third-party service, or the like. The DN 110 may transmit a downlink protocol data unit (PDU) to the UPF 104, or may receive a PDU transmitted from the UE 101 from the UPF 104.

The PCF 106 may receive information regarding packet flows from an application server and may provide functions of determining policies such as mobility management, session management, and the like. Specifically, the PCF 106 may support functions, such as support of a unified policy framework for controlling a network operation, provision of a policy rule so that the control plane function(s) (e.g., AMF, SMF, etc.) may execute the policy rule, and front end implementation for accessing related subscription information in order to determine a policy within a user data repository (UDR).

The SMF 105 may provide a session management function and may be managed by a different SMF for each session when the UE has multiple sessions. The SMF 105 may support functions such as session management (e.g., establishment, modification, and release of a session, including maintenance of a tunnel between the UPF 104 and the (R)AN 102 node), UE Internet protocol (IP) address assignment and management (optionally including authentication), UP function selection and control, configuration of traffic steering to route traffic from the UPF 104 to an appropriate destination, and termination of interfaces toward policy control functions, enforcement of policy and quality of service (QoS) control parts, lawful intercept (LI) (for an SM event and an interface to an LI system), termination of NAS message SM parts, downlink data notification, delivery of access network (AN)-specific SM information to (R)AN 102 through N2 via an initiator (AMF 103), determination of a session and service continuity (SSC) mode, and/or a roaming function. Some or all of the functions of the SMF 105 may be supported within a single instance of one SMF.

The UDM 109 may store the user's subscription data, policy data, and the like. The UDM 109 may include two parts, that is, an application front end (FE) (not illustrated) and a user data repository (UDR) (not illustrated).

The FE may include a UDM FE responsible for location management, subscription management, credential processing, etc., and a PCF responsible for policy control. The UDR may store data required for functions provided by the UDM-FE and a policy profile required by the PCF. Data stored in the UDR includes policy data and user subscription data including a subscription identifier, security credential, access and mobility-related subscription data, and session-related subscription data. The UDM-FE may support functions such as accessing subscription information stored in the UDR, authentication credential processing, user identification handling, access authentication, registration/mobility management, subscription management, and/or SMS management.

The UPF 104 transfers a downlink PDU, received from the DN 110, to the UE 101 via the (R)AN 102 and transfers an uplink PDU, received from the UE 101, to the DN 110 via the (R)AN 102. The UPF 104 may support functions such as an anchor point for intra-/inter-RAT mobility, an external PDU session point for interconnection to a data network, packet routing and forwarding, a user plane part of packet inspection and policy rule enforcement, lawful intercept, and traffic usage reporting, uplink classifier for supporting the routing of traffic flows to the data network, branching points for supporting multi-homed PDU sessions, QoS handling for a user plane (e.g., packet filtering, gating, uplink/downlink rate enforcement), uplink traffic verification (SDF mapping between service data flow (SDF) and QoS flow), transport-level packet marking within uplink and downlink, downlink packet buffering, and downlink data notification triggering. Some or all of the functions of the UPF 104 may be supported within a single instance of one UPF.

The AF 107 interworks with a 3GPP core network in order to provide services (e.g., supporting functions, such as an application influence on traffic routing, access to network capability exposure, and interworking with a policy framework for policy control).

The (R)AN 102 collectively refers to a new radio access network capable of supporting both evolved E-UTRA which is an evolved version of 4th generation (4G) radio access technology and new radio (NR) technology (e.g., gNB).

The gNB supports functions, such as functions for radio resource management (i.e., radio bearer control, radio admission control, connection mobility control, and dynamic allocation of resources (i.e., scheduling) to the UE in an uplink/downlink), Internet protocol (IP) header compression, encryption and integrity protection of a user data stream, selection of the AMF upon attachment of the UE when routing to the AMF has not been determined based on information provided to the UE, user plane data routing to the UPF(s), control plane information routing to the AMF, connection setup and release, paging message scheduling and transmission (generated from the AMF), system broadcast information scheduling and transmission (generated from the AMF or operation and maintenance (O&M)), measurement and measurement report configuration for mobility and scheduling, transport level packet marking in the uplink, session management, support of network slicing, QoS flow management and mapping to a data radio bearer, support of the UE that is in an inactive mode, a distribution function of a NAS message, a NAS node selection function, radio access network sharing, dual connectivity, and/or tight interworking between the NR and the E-UTRA.

The UE 101 refers to a user equipment. A user equipment may be referred to as such a term as "terminal", "mobile equipment (ME)", or "mobile station (MS)". In addition, the user equipment may be a portable device, such as a laptop, a mobile phone, a personal digital assistant (PDA), a smartphone, or a multimedia device, or may be a non-portable device, such as a personal computer (PC) or a vehicle-mounted device.

The NEF 111 may provide means, provided by 3GPP network functions, for securely exposing services and capabilities for, for example, third parties, internal exposure/re-exposure, application functions, and edge computing. The NEF 111 may receive information (based on the exposed capability (capabilities) of (an)other NF(s)) from the other NF(s). The NEF 111 stores the received information as structured data by using a standardized interface to a data storage network function. The stored information may be re-exposed by the NEF 111 to other NF(s) and AF(s) and used for other purposes such as analysis.

The NSSF 114 may select a set of network slice instances serving the UE 101. In addition, the NSSF 114 may determine granted network slice selection assistance information (NSSAI) and, if necessary, perform mapping to a subscribed single-network slice selection assistance information (S-NSSAI). Furthermore, the NSSF 114 may determine a configured NSSAI and, if necessary, perform mapping to the subscribed S-NSSAIs. Moreover, the NSSF 114 may determine a set of AMFs used to serve the UE or, depending on the configuration, query the NRF 115 to determine a list of candidate AMFs.

The NRF 115 may support a service discovery function. The NRF 115 may receive an NF discovery request from an NF instance, and provide information on a discovered NF instance to the NF instance. In addition, the NRF 115 may maintain available NF instances and services supported thereby.

As described in Table 1, a URSP rule may include a traffic descriptor (TD) that identifies a UE application or traffic generated by a UE application and a route selection component (RSC) that determines which PDU session to associate with a UE application or UE application traffic when an identified traffic descriptor is detected.

**[Table 1] URSP Rules**

| URSP Rules | | | | | | | |
|---|---|---|---|---|---|---|---|
| PSI | Preced ence | Traffic Descriptor (TD) | Route Selection Component (RSC) | | | | |
| | | IP, FQDN, APPID, CC, DNN | S-NSSAI | DNN | PDU-Typ e | SSC Mode | Access-T ype |
| PSI = 1 | 1 | IP (10.10.10.*) | S-NSSAI #1 | DNN#1 | IPv4 | | |
| | 2 | FQDN (www.svcl.co m) | S-NSSAI #2 | DNN#2 | IPv4/v6 | SSC#2 | 3GPP |
| | 3 | APPID (A-OS, com.gov.tv), IP (20.20. *.*) | S-NSSAI #3 | DNN#3 | IPv4 | | |
| PSI = 2 | 4 | Connection capability (IMS) | S-NSSAI #4 | DNN#4 | IPv4 | SSC#1 | 3GPP |
| | 5 | IP (30.30. *.*), FQDN (www.svc2.co m) | S-NSSAI #5 | DNN#5 | IPv4v6 | SSC#2/3 | |
| PSI = 3 | 6 | DNN#3 | S-NSSAI #6 | DNN#6 | | | |

The traffic descriptor includes content including a UE application or a feature for detecting an application, and may include the following elements.
■ Application Descriptor: Information for referring a UE application, which includes an OSID and an APPID.
■ IP Descriptor: Indicates an IP address that represents a destination address of an IP packet transmitted by a UE, which may include an IP 3-tuple, i.e., an IP destination address, a port number, and a protocol.
■ Non-IP Descriptor: Information for specifying a recipient of non-IP data.
■ Domain Descriptor: A destination address of a server to which a UE connects is expressed in a fully qualified domain name (FQDN) format.
■ Connection Capability (CC): Type information for specifying a characteristic of connected traffic, which may have a value, such as IP multimedia subsystem (IMS), multimedia messaging service (MMS), and Internet.
■ DNN: Data network name.

As described in Table 1, the UE route selection component (RSC) may include the following elements for specifying an attribute of a PDU session such that an application or application traffic detected by a traffic descriptor is mapped to a specific PDU session:
■ Data Network Name (DNN): Data network name, which may be used equivalently to an access point name (APN) when the UE connects to an EPC network.
■ S-NSSAI: Information for specifying a network slice.
■ PDU Session Type: An element for specifying the type of a PDU session, which may specify IPv4, IPv6, IPv4v6, Ethernet, or non-IP.
■ SSC Mode: An element that indicates the continuity of a session and a service and may have a value of SSC Mode 1, 2, or 3.
■ Access-Type: An element that indicates whether a PDU session is connected via 3GPP access or via non-3GPP access.

A plurality of URSP rules is divided in policy sections within a UE policy container, and may be included separately a plurality of policy sections so as not to exceed the maximum allowable transmission size of an NAS layer. A single URSP rule may not be included across two policy sections, and a single URSP rule needs to be included in a single policy section.

The USRP rules are prioritized.

A UE may receive a URSP rule in the NAS layer. Then, the UE may detect a UE application or UE application traffic.

A method for detecting the UE application is as follows.
■ The UE application may require a specific network through an application programming interface (API) provided by a UE operating system. Direct information corresponding to a traffic descriptor received by the NAS of a modem of the UE or information that may be mapped to the traffic descriptor may be transmitted through the API provided by the UE operating system.
■ The UE application may be detected indirectly by the UE operating system. For example, in an Android operating system of the UE, when the UE application is installed, whether the UE application is installed may be identified by a package manager that manages the UE application, and the status of the application may be identified by detecting a user' action. According to the status of the application managed within the operating system, a change in the status, such as an event that the application occupies a user screen (event of switching to a foreground activity), may be detected, thereby indirectly detecting the network connection of the application.
■ The UE operating system may detect the UE application or traffic generated by the UE application even when the API through which the UE application transmits a packet through the UE operating system is invoked.
■ When the UE application attempts to access a service running on the Internet or edge computing by providing an FQDN, the UE operating system may detect the FQDN provided by the UE application.

When the UE operating system detects the application or the traffic generated by the application in a URSP handler, the URSP handler identifies the URSP rule received in the NAS to identify which URSP rule the detected application corresponds to.

When the URSP handler discovers a TD matching the URSP rule, the URSP handler identifies whether a PDU session matching an RSC corresponding to the TD is currently generated. When the PDU session with the RSC matching the URSP rule already exists, the URSP handler binds the UE application to the corresponding PDU session. Subsequently, traffic generated from the bound application is forwarded using the bound PDU session.

When there is no PDU session including the RSC associated with the traffic descriptor discovered by the URSP handler, the URSP handler may initiate a PDU session generation procedure to generate the corresponding PDU session. When generating a PDU session, the UE may initiate generation of the PDU session by including a PDU session parameter corresponding to the RSC of the URSP rule.

In the disclosure, when the URSP handler detects an application or application traffic, a corresponding URSP rule exists, but a PDU session having a corresponding RSC has not been generated, the URSP handler may initiate generation of a new PDU session, and may forward content for referring the discovered application along with a PDU session parameter corresponding to the RSC included in the URSP rule via a session generation request message.

In the disclosure, for consistency of explanation, information for referring to a discovered application is referred to as URSP enforcement report information. URSP enforcement report information may also use a traffic descriptor value (e.g., an application descriptor, a DNN, an IP address, a FQDN, or a connection capability). A representative traffic descriptor value and an associated route selection component, such as a DNN, APN, or S-NSSAI value, may also be included.

When the UE receives a connection capability transmitted with a URSP rule, if a detected application corresponds to the connection capability, the UE may perform an operation of reporting the connection capability in a PDU session generation request or modification message.

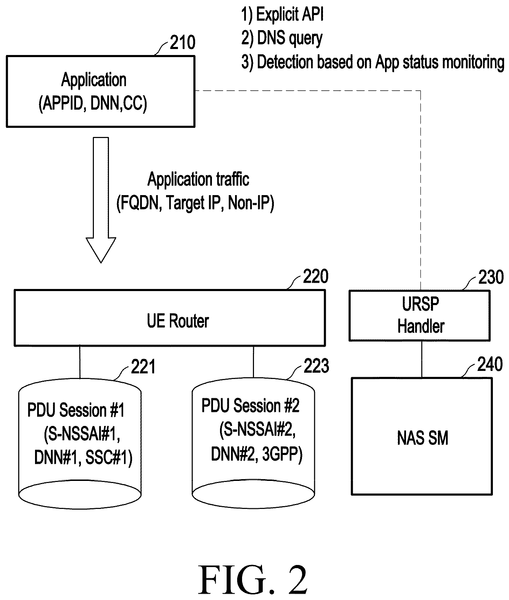

FIG. 2 is a diagram illustrating the concept of a UE route selection policy (hereinafter, "URSP").

Referring to FIG. 2, at least one of an APPID, a DNN, and a CC may be configured for an application 210, and the application 210 may transmit application traffic including at least one piece of information of an FQDN, a target IP, and a non-IP to a UE router 220. The UE router 220 may establish and/or manage a first PDU session (PDU session #1) 221 and a second PDU session (PDU session #2) 223.

According to an embodiment, the first PDU session 221 may be mapped to at least one of a first S-NSSAI, a first DNN, and first session and service continuity (SSC). According to an embodiment, the second PDU session 223 may be mapped to at least one of a second S-NSSAI, a second DNN, and 3GPP.

A URSP handler 230 may perform an operation related to at least one of 1) to 3) below with the application 210.
1) Invoking of explicit application programming interface (API), such as an API requesting use of a specific network or an API for network socket connection, provided by an operating system to the application
2) Domain name system (DNS) query
3) Detection based on application status monitoring.
4) Information (e.g., source and destination IP addresses) obtained from network traffic generated by application
5) Ethernet MAC address

The URSP handler 230 may connect to and/or interact with a non-access-stratum session management (NAS SM) 240.

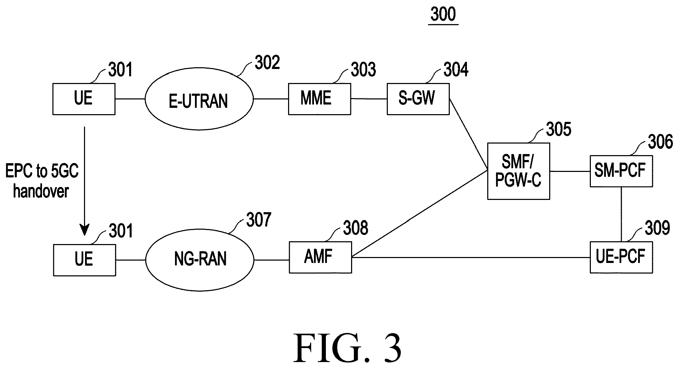

FIG. 3 illustrates a 5GC-EPC scenario according to an embodiment of the disclosure.

Referring to FIG. 3, a wireless communication system 300 including an EPC and a 5GC may include a UE 301, an E-UTRAN 302, an MME 303, an S-GW 304, an SMF/PGW-C 305, an SM-PCF 306, an NG-RAN 307, an AMF 308, and a UE-PCF 309.

When connecting to an EPC network, the UE 301 may transmit a URSP-applicable capability to the SMF/PGW-C 305 during an Initial Attach or a first PDN connectivity.

The UE 301 may receive a URSP rule transmitted from the UE-PCF 309 in an Attach procedure or an initial PDN connectivity generation procedure. In an embodiment, the URSP rule may include S-NSSAI.

The UE 301 may perform a connection request for a PDN connectivity matching the URSP rule. In an embodiment, the PDN connectivity request may include a PDU session ID and APN information. The MME 303 may receive a PDN context generation request through the S-GW 304. Here, the PDN connectivity request may include only the APN information when matching the URSP rule. The UE 301 may not include the S-NSSAI when establishing the PDN connectivity.

The SMF/PGW-C 305 may receive the PDN connectivity request from the UE 301, may associate associated S-NSSAI with an APN, and may transmit the associated S-NSSAI to the UE 301 via a PDN connectivity request response message. When a plurality of pieces of S-NSSAI is associated with a single APN, the PGW-C/SMF 305 may determine that there is a possibility that S-NSSAI not matching the URSP rule transmitted to the UE 301 is associated.

When the UE 301 moves to an area where a 5GC is available, a network slice may be changed to an available area in the 5GC.

The UE 301 may transmit a registration request message including a PDU session ID to the AMF 308 of the 5GC. The UE 301 may continue to use a session service from the same SMF. A PDN connectivity associated with an application in the UE 301 may be maintained when the UE moves to the 5GC. In this case, the URSP rule transmitted to the UE 301 from the EPC associated with the application may not match S-NSSAI actually associated with the application in the UE.

The UE-PCF 309 knows the URSP rule and the SMF 305 knows a PDU session parameter including S-NSSAI corresponding to an RSC, but the UE-PCF 309 and the SMF 305 may not be connected to each other.

Even though receiving a PDU session parameter requested by the UE 301, the SMF 305 is unable to know which rule the request is based on or which application the request is for.

In the 5GC, the SM-PCF 306 may be connected to the SMF 305 to perform a function of transmitting a PCC rule including session-related QoS information and a session-related policy to the SMF 305. According to an embodiment, for a single UE, different SMFs may exist for each session of the UE, and a plurality of SM-PCFs may exist likewise. According to an embodiment, the SM-PCF 306 may not be the same PCF as the UE-PCF 309. The UE-PCF 309 is a PCF that serves to stores and manages a UE policy, and only a single PCF may logically exist for a single UE.

The UE-PCF 309 performs a function of distributing a UE policy, such as a URSP and an ANDSP, transmitted to the UE 301. Similar to an AM-PCF, which manages a policy for an access network and mobility, such as a non-allowed service area and an RFSP for the UE 301, a single logical PCF may exist per UE.

In the disclosure, the UE-PCF 309 may be the same NF as the AM-PCF. According to an embodiment, the AM-PCF may perform the function of the UE-PCF 309.

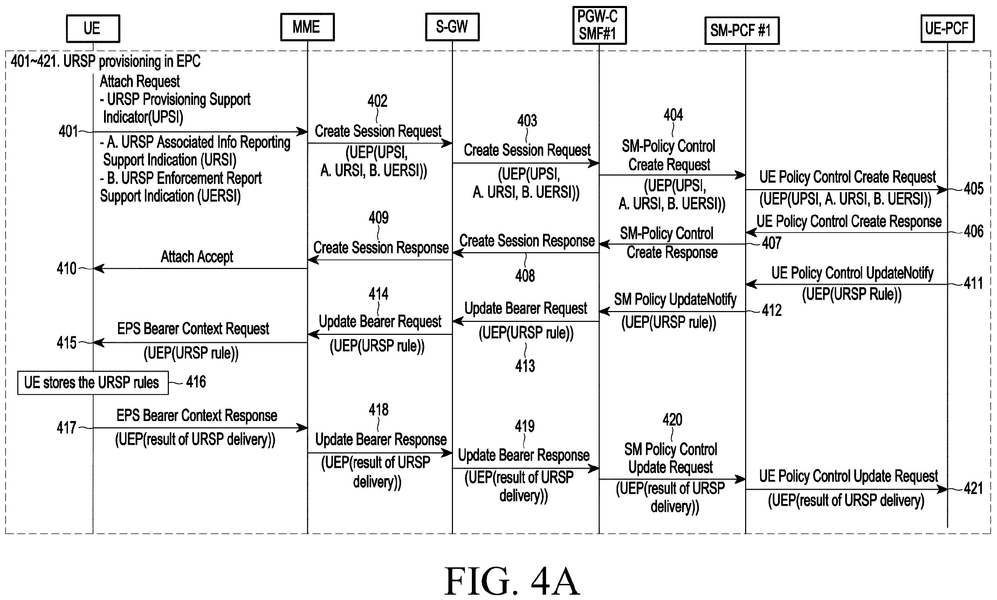

FIG. 4A to FIG. 4C illustrate a procedure of receiving URSP-associated information about a UE in an EPC network and recovering slice inconsistency according to an embodiment of the disclosure.

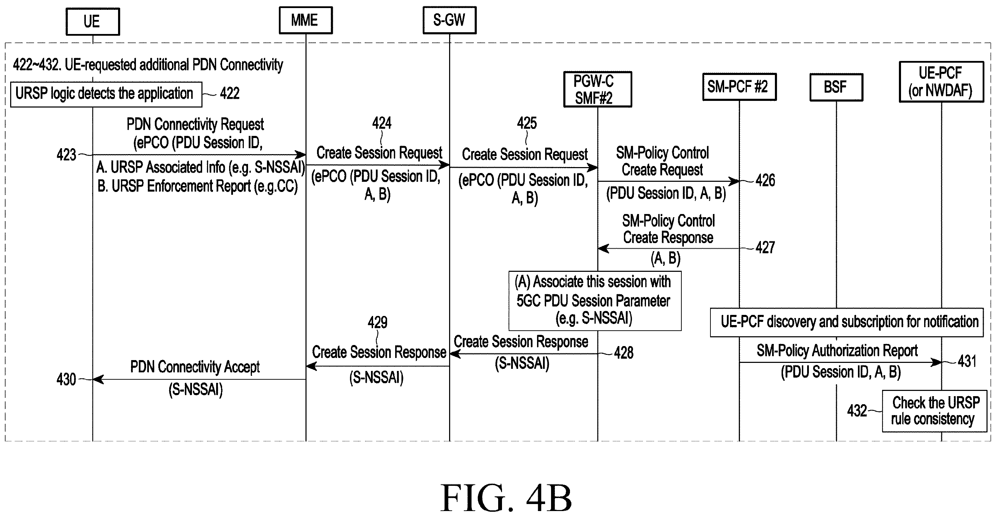

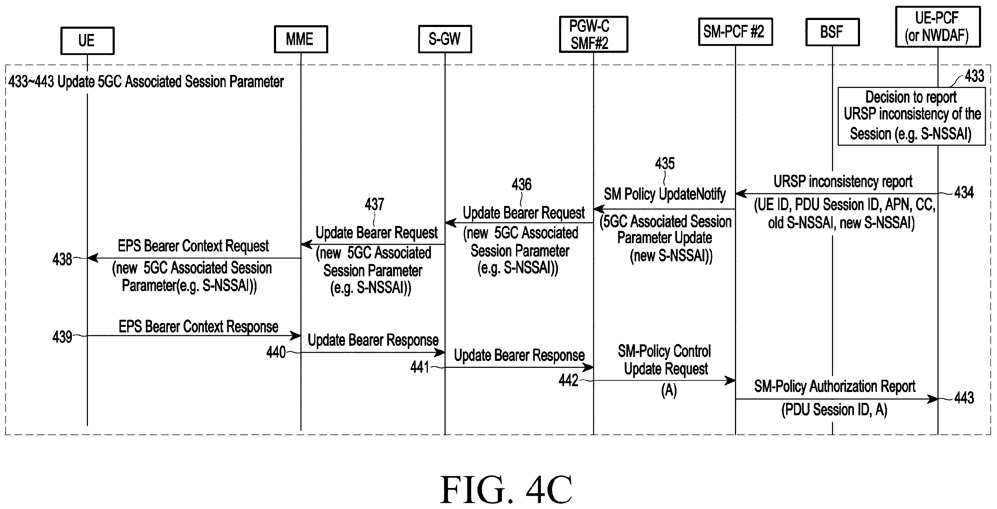

FIG. 4A illustrates URSP provisioning in an EPC (operations 401 to 421), FIG. 4B illustrates UE-requested additional PDN connectivity (operations 422 to 432), and FIG. 4C illustrates an update 5GC associated session parameter (operations 433 to 443).

Referring to FIG. 4A, in operation 401, when a PDN connectivity is generated or modified in the EPC, the UE may transmit capability information about the UE to an MME during an Attach process or a first PDN connectivity generation process to forward S-NSSAI selection information corresponding to an URSP. The capability information transmitted to the MME may be forwarded to a PGW-C/SMF via an S-GW.

According to an embodiment, the capability information transmitted by the UE may include at least one of the following indicators.
- URSP provisioning support indication (UPSI): The UPSI indicates whether the UE is able to receive a URSP rule in the EPC network. This indicator allows the UE to express a capability to transmit S-NSSAI included in a route selection component in the URSP rule while transmitting a PDN connectivity generation request when detecting an application matching the URSP rule.
- URSP associated session parameter Info reporting support indication (URSI): The URSI indicates a function of the UE reporting parameters supported only by a 5GC network among URSP route selection parameters corresponding to a URSP rule when detecting an application matching the URSP rule in the EPC network. For example, when S-NSSAI selection information is included in a UE route selection component, this indicator indicates a function of transmitting the S-NSSAI selection information in a PDN generation or modification request message. The UE transmitting this indicator may transmit the S-NSSAI selection information in a PDN connectivity generation request in the EPC when detecting the application matching the URSP rule. A UE capability indicated by this indicator may be considered as a function included in a UPSI. In this case, when the UE provides the UPSI, the UE may transmit a URSP-related parameter (e.g., S-NSSAI) in a PDN connectivity request or modification request.
- URSP enforcement reporting support indication in EPC (UERSI): The UERSI indicates a URSP enforcement reporting function (capability) of the UE when detecting an application matching a URSP rule in the EPC network. The UE transmitting this indicator may transmit a PDN connectivity generation request including URSP enforcement reporting information to the PGW-C/SMF in the EPC when detecting the application matching the URSP rule. Further, the UE transmitting this indicator may transmit a PDU session generation request including URSP enforcement reporting information to the PGW-C/SMF in a 5GC when detecting the application matching the URSP rule. The URSP enforcement reporting information may include a connection capability in a URSP traffic descriptor. The EPC may transmit S-NSSAI along with the connection capability.

In operation 402, the MME may transmit a session generation request message including an ePCO received from the UE to the S-GW. According to an embodiment, a message included in the ePCO may include at least one of the information (UPSI, URSI, and UERSI) included in a UE policy container included in operation 401.

In operation 403, the S-GW may transmit a session generation request message including the ePCO received from the MME to a first PGW-C/SMF (PGW-C/SMF#1). The message included in the ePCO may include at least one of the information (UPSI, URSI, and UERSI) included in the UE policy container in operation 401.

In operation 404, the first PGW-C/SMF (PGW-C/SMF#1) may transmit an SM policy control generation request message to a first SM-PCF (SM-PCF#1). The SM policy control generation request message may include at least one of the UE policy container information (UPSI, URSI, and UERSI) received by the PGW-C/SMF from the UE.

In operation 405, the SM-PCF may transmit a UE policy control generation request message to a UE-PCF. The UE policy control generation request message may include at least one of the UE policy container information (UPSI, URSI, and UERSI) received by the PGW-C/SMF from the UE.

In operation 406 to operation 410, a response message may be transmitted according to a message protocol between entities. In operation 406, the UE-PCF may transmit a UE policy control generation response message to the first SM-PCF (SM-PCF#1). In operation 407, the first SM-PCF (SM-PCF#1) may transmit an SM policy control generation response message to the first PGW-C/SMF (PGW-C/SMF#1). In operation 408, the first PGW-C/SMF (PGW-C/SMF#1) may transmit a generation session response message to the S-GW. In operation 409, the S-GW may transmit the generation session response message to the MME. In operation 410, the MME may transmit an Attach Accept message to the UE.

In operation 411, the UE-PCF may generate a URSP rule for the UE connected in the EPC, and may transmit a UE policy control update notification message including the URSP rule to the first SM-PCF (SM-PCF#1).

In operation 412, the first SM-PCF (SM-PCF#1) may forward the URSP rule to the first PGW-C/SMF (PGW-C/SMF#1).

In operation 413 and operation 414, the first PGW-C/SMF (PGW-C/SMF#1) may forward the ePCO including the URSP rule to the MME via the S-GW.

In operation 415, the MME may transmit an EPS bearer context request message including the ePCO to transmit the URSP rule to the UE. The UE may receive the URSP rule included in the EPS bearer context request message in the EPC.

In operation 416, the UE may store the URSP rule. The received URSP rule may include a traffic descriptor and RSC information, and the RSC information may include S-NSSAI.

In operation 417 to operation 421, the UE may transmit a response to reception of the URSP rule to the UE-PCF via the MME, the S-GW, the first PGW-C/SMF (PGW-C/SMF#1), and the first SM-PCF (SM-PCF#1). In operation 417, the UE may transmit an EPS bearer context response message including a URSP delivery result to the MME. In operation 418, the MME may transmit the EPS bearer context response message including the URSP delivery result to the S-GW. In operation 419, the S-GW may transmit an update bearer response message including the URSP delivery result to the first PGW-C/SMF (PGW-C/SMF#1). In operation 420, the first PGW-C/SMF (PGW-C/SMF#1) may transmit an SM policy control update request message including the URSP delivery result to the first SM-PCF (SM-PCF#1). In operation 421, the first SM-PCF (SM-PCF#1) may transmit a UE policy control update request message including the URSP delivery result to the UE-PCF.

Referring to FIG. 4B, in operation 422, the UE may detect an application matching the URSP rule. URSP logic may detect the application.

In operation 423, the UE may transmit a PDN connectivity request message including an ePCO (at least one of a PDU session ID, URSP-associated information, and URSP enforcement report information) to the MME. When the UE supports URSP reception in the EPC or URSP enforcement reporting in the EPC, the UE may forward the ePCO including the S-NSSAI included in an RSC that matches the traffic descriptor of the received URSP rule to the SMF/PGW-C. Content to be forwarded is included in the ePCO, and may thus be forwarded to the SMF/PGW-C via the MME.

According to an embodiment, when the UE transmits the URSI in operations 401 to 410, that is, when the UE detects the application corresponding to the URSP rule in the EPC network, if the UE supports the function of reporting a parameter (e.g., S-NSSAI) supported only by the 5GC network among the URSP route selection parameters corresponding to the URSP rule, session information (e.g., S-NSSAI) included in the URSP RCS may be transmitted in URSP-associated session information (corresponding to A. URSP-associated Info indicated in operation 423 of FIG. 4).

According to an embodiment, when the UE transmits the UERSI in operations 401 to 410, that is, when the EPC supports URSP enforcement reporting (B. URSP enforcement report information indicated in 423 of FIG. 4), traffic descriptor information in the URSP rule corresponding to the application may be included in URSP enforcement reporting information. The UE may include connection capability information, which is a URSP traffic descriptor, in the URSP enforcement reporting information. The URSP enforcement reporting information may additionally include at least one of S-NSSAI, an APN, and an SSC mode, which are RSC information matching the URSP traffic descriptor.

In operation 424, the MME may select a PGW-C/SMF, based on content (e.g., an APN value) included in the PDN connectivity request message, the location of the UE, and subscriber information about the UE. The MME may transmit a Create Session Request message including the ePCO received from the UE to the S-GW. The Create Session Request message may include a PDU session ID. The Create Session Request message may include the URSP-associated session information (A), the URSP enforcement report information (B), or both thereof. Information included in the Create Session Request message may be forwarded to a second PGW-C/SMF (PGW-C/SMF#2) via the S-GW.

In operation 425, the S-GW may forward the Create Session Request message to the second PGW-C/SMF (PGW-C/SMF#2). The second PGW-C/SMF (PGW-C/SMF#2) may identify the content included in the ePCO transmitted from the UE. The second PGW-C/SMF (PGW-C/SMF#2) may receive at least one of the PDU session ID, the URSP-associated session information (A), and the URSP enforcement report information (B) from the UE. The S-NSSAI is information transmitted from the UE and received via the MME and the S-GW, and may be forwarded as being included in the URSP-associated session information.

The second PGW-C/SMF (PGW-C/SMF#2) may associate one piece of S-NSSAI among pieces of S-NSSAI associated with the APN from APN information. This association operation may be considered as an operation of selecting appropriate S-NSSAI in advance when the UE moves to the 5GC. When the second PGW-C/SMF (PGW-C/SMF#2) selects S-NSSAI associated with the APN, the second PGW-C/SMF (PGW-C/SMF#2) may make a decision by referring to the S-NSSAI matching the URSP rule transmitted by the UE. Alternatively, the second PGW-C/SMF (PGW-C/SMF#2) may select S-NSSAI, based on information included in the URSP enforcement report from the UE.

In operation 426, the second PGW-C/SMF (PGW-C/SMF#2) may generate or modify an SM policy session to the second SM-PCF (SM-PCF#2). The second PGW-C/SMF (PGW-C/SMF#2) may forward the URSP-associated session information (A) and/or the URSP enforcement report information (B) received from the UE to the second SM-PCF (SM-PCF#2). The information included in the URSP enforcement report may be a CC or S-NSSAI. Alternatively, when the UE supports URSP enforcement reporting in the EPC, a function of the UE reporting S-NSSAI in the EPC may report routing selection components including the APN, the S-NSSAI, and the SSC mode included in the selected URSP rule together with the CC, which is the traffic descriptor matching the URSP. Information reported by the second PGW-C/SMF (PGW-C/SMF#2) to the second SM-PCF (SM-PCF#2) may include the PDU session ID and the URSP enforcement report information. The URSP enforcement report information may include CC information and/or the S-NSSAI.

In operation 427, the second SM-PCF (SM-PCF#2) may transmit a session-related policy control generation response message to the second PGW-C/SMF (PGW-C/SMF#2). The second SM-PCF (SM-PCF#2) may transmit a session-related policy including S-NSSAI to be used in a session. The second SM-PCF (SM-PCF#2) may transmit, to the second PGW-C/SMF (PGW-C/SMF#2), a policy on selection of S-NSSAI that may be associated with the current session from the information, such as the S-NSSAI, the APN, and the CC, included in the URSP-associated session information or the URSP enforcement report information reported by the UE.

In operation 428, the second PGW-C/SMF (PGW-C/SMF#2) may select an S-NSSAI value associated with the APN information, which is session information requested by the current UE.

According to an embodiment, information used by the second PGW-C/SMF (PGW-C/SMF#2) to associate the S-NSSAI is as follows.
- Subscriber information about the UE, for example, information about an APN to which the UE subscribes, and UE usage type
- Information included and requested in the PDN connectivity request message of the UE: APN
- PDU session identifier information about the UE: May be used by the PGW-C/SMF to determine whether the UE is an interworking UE.
- URSP-associated information transmitted by the UE: Attribute information about a PDU session that the UE needs to use in the 5GC network, such as S-NSSAI
- URSP enforcement information transmitted by the UE: Traffic descriptor information (e.g., CC information) that matches the URSP rule

The second PGW-C/SMF (PGW-C/SMF#2) may transmit a Create Session Response message including the associated S-NSSAI to the S-GW.

In operation 429, the S-GW may forward content of the message received from the second PGW-C/SMF (PGW-C/SMF#2) to the MME.

In operation 430, the MME may transmit a PDU connection acceptance message to the UE. The PDU connection acceptance message may include the S-NSSAI that may be used when the UE moves to the 5GC.

In operation 431, the second SM-PCF (SM-PCF#2) may retrieve or identify a UE-PCF of the current UE. The second SM-PCF (SM-PCF#2) may receive information about the UE-PCF from the second PGW-C/SMF (PGW-C/SMF#2). Alternatively, the second SM-PCF (SM-PCF#2) may discover the UE-PCF by inquiring of a binding support function (BSF) using the UE identifier. Alternatively, when an SM-policy connection for the UE is generated from the UE-PCF, the second SM-PCF (SM-PCF#2) may already know an address of the UE-PCF by receiving a subscription request message for requesting a report on the SM-policy connection from the UE-PCF. The second SM-PCF (SM-PCF#2) may report the URSP-associated session information and/or the URSP enforcement report information received from the second SMF/PGW-C (SMF/PGW-C#2) to the UE-PCF in operation 424.

When the second PGW-C/SMF (PGW-C/SMF#2) receives the information included in the URSP rule selected by the UE based on the URSP rule from the UE, the second SM-PCF (SM-PCF#2) may configure a policy control request trigger (PCRT) that specifies a condition for requesting a report on the information, and may transmit the PCRT to the second PGW-C/SMF (PGW-C/SMF#2). The information included in the URSP rule may include a CC or S-NSSAI value. When receiving the URSP enforcement report information associated with the PDN connectivity request requested by the UE to the UE-PCF, the S-NSSAI included in the URSP enforcement report information, or S_NSSAI separately associated with the PDN connectivity request, the second SM-PCF (SM-PCF#2) may report the same to the UE-PCF.

In operation 432, the UE-PCF may identify the URSP enforcement report information received from the second SM-PCF (SM-PCF#2) and a URSP rule for a subscriber UE stored in a UDR to determine whether the application detected by the current UE is mapped to a PDU session that matches the URSP. In an embodiment, when determining inconsistency in the URSP rules, the UE-PCF may transmit a message for requesting modification of the S-NSSAI or reallocation or reconfiguration of S-NSSAI to the second SM-PCF (SM-PCF#2).

Referring to FIG. 4C, in operation 433, the UE-PCF may initiate a procedure of reporting detection of URSP inconsistency to the UE.

In operation 434, the UE-PCF may transmit an inconsistency detection report or a message for requesting a session update request to the second SM-PCF (SM-PCF#2). The message may include at least one of the UE identifier, the PDU session identifier, the APN, the CC, new S-NSSAI, and the S-NSSAI to be changed.

In operation 435, the second SM-PCF (SM-PCF#2) may forward a session-related policy update notification message to the second PGW-C/SMF (PGW-C/SMF#2). The session-related policy update notification message may include 5GC-related session information update information (or new 5GC-related session parameter) (e.g., S-NSSAI).

In operations 436 and 437, the second PGW-C/SMF (PGW-C/SMF#2) may forward the 5GC-related session information update information to the MME via the S-GW. In operation 436, the second PGW-C/SMF (PGW-C/SMF#2) may transmit an update bearer request message including the new 5GC-related session parameter (e.g., the S-NSSAI) to the S-GW. In operation 437, the S-GW may transmit the update bearer request message including the new 5GC-related session parameter (e.g., the S-NSSAI) to the MME.

In operation 438, the MME may transmit an EPS bearer context request message including the new 5GC-related session parameter (e.g., the S-NSSAI) to the UE.

In operations 439 to 441, the UE may forward an EPS bearer context response message to the second PGW-C/SMF (PGW-C/SMF#2) via the MME and the S-GW.

In operation 442, the second PGW-C/SMF (PGW-C/SMF#2) may report changed URSP-associated information (A) to the second SM-PCF (SM-PCF#2) when a change is completed.

In operation 443, the second SM-PCF (SM-PCF#2) may report the changed URSP-associated information (A) and PDU session ID to the UE-PCF.

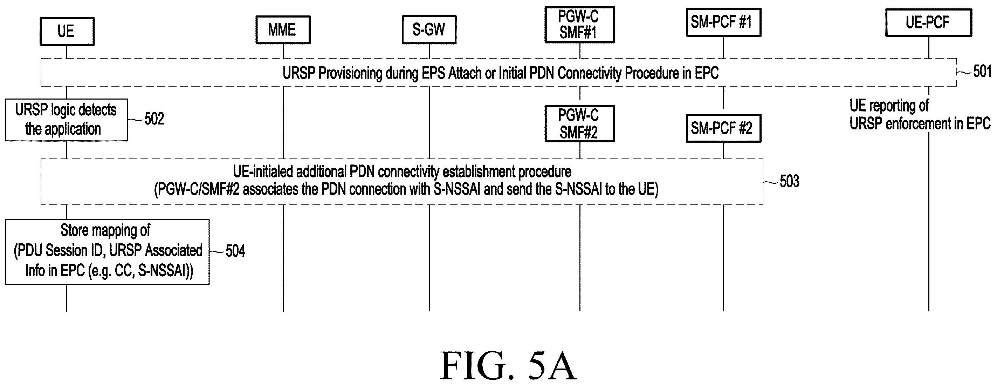

FIG. 5A to FIG. 5C illustrate a procedure of receiving URSP-associated information about a UE after a move to a 5GC network and recovering slice inconsistency according to an embodiment of the disclosure.

Referring to FIG. 5a, in operation 501, the UE may access an EPC network to receive a URSP rule from the EPC network through an EPS Attach procedure or a PDU connection procedure, and may store the received URSP rule. In operation 501, the UE may perform URSP provisioning with at least one of an MME, an S-GW, a first PGW-C/SMF (PGW-C/SMF#1), a first SM-PCF (SM-PCF#1), and a UE-PCF during the EPS Attach procedure or the PDU connection procedure in the EPC network.

In operation 502, the UE may detect an application that matches the URSP rule. URSP logic may detect the application.

In operation 503, the UE may generate a PDN connectivity in the EPC network according to the detected URSP rule. Although the URSP rule includes S-NSSAI, the UE may transmit only an APN because the UE is in the EPC network. The PGW-C/SMF receiving a PDN connectivity establishment request requested by the UE may select one of pieces of S-NSSAI associated with the APN requested by the UE as associated information. The PGW-C/SMF transmits the selected associated S_NSSAI to the UE. In operation 503, the UE may perform a UE-initialized additional PDN connectivity establishment procedure. A second PGW-C/SMF (PGW-C/SMF#2) may associate the PDN connectivity with the S-NSSAI, and may transmit the S-NSSAI to the UE. In an embodiment, a second SM-PCF (SM-PCF#2) may configure and transmit a policy control request trigger (PCRT) to the second PGW-C/SMF (PGW-C/SMF#2).

In operation 504, when generating the PDN connectivity in the EPC network, the UE may store URSP-associated information (e.g., at least one of matched CC information, RSC information of a matched URSP, and S-NSSAI) corresponding to the generated PDU session together with an associated PDN session ID. The UE may identify whether the S-NSSAI received from the PGW-C/SMF is one of pieces of S-NSSAI included in the matched URSP rule that triggers the PDN connectivity in the UE. When the S-NSSAI associated with the PDN connectivity received from the PGW-C/SMF is not included in the URSP rule that triggers the request to generate the PDN connectivity or is different from the S-NSSAI included in the URSP rule, the UE may record URSP inconsistency information. Alternatively, the UE may store URSP-related information about all PDN connectivities generated through a URSP function together with a PDU session ID. The URSP-related information stored for each generated PDN connectivity may include CC information and S-NSSAI included in a matched URSP rule, in which when the S_NSSAI is different from S-NSSAI about the generated PDN connectivity, the S_NSSAI may be stored by indicating that the S_NSSAI is different from the S-NSSAI about the generated PDN connectivity.

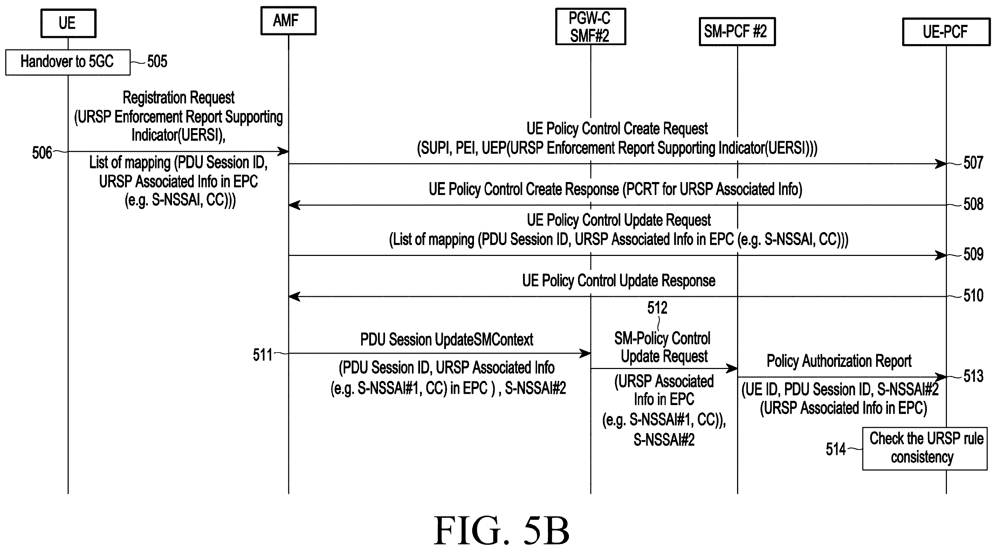

Referring to FIG. 5B, when the UE moves to a 5G network in operation 505, the UE may transmit a registration request message to the 5GC in operation 506. When the UE connects to the 5GC network after generating the PDN connectivity based on the URSP rule in the EPC, the UE may transmit a 5GC registration request message including URSP-associated information about each PDU session. According to an embodiment, the URSP-associated information about each PDU session may include a PDU session ID and S-NSSAI or a PDU session ID and traffic descriptor information (e.g., connection capability information) of the URSP. The information transmitted from the UE to an AMF may be transmitted as being included in list information of PDU sessions to be reactivated, or may be transmitted as being included in UE policy container information transmitted by the UE to the UE-PCF. The AMF may receive a URSP enforcement report from the UE, and may report the same directly to the UE-PCF or to the SM-PCF. When the UE provides a URSP enforcement report function, the UE may transmit the registration request message including a URSP enforcement report supporting indicator (UERSI) indicating support for the URSP enforcement report function to the AMF.

In operation 507, the AMF may transmit a UE policy control generation request message for requesting generation of a policy control connection for the UE to the UE-PCF. The UE policy control generation request message may include the URSP enforcement report supporting indicator (UERSI) received by the AMF from the UE.

In operation 508, the UE-PCF may transmit a policy control request trigger (PCRT) for the UE to request reception of a URSP-associated report generated in the EPC from the AMF to the AMF.

In operation 509, the AMF may receive the PCRT for requesting the reception of the URSP-associated report generated in the EPC from the UE-PCF, and may report CC information associated with each PDU session ID or S-NSSAI associated with each PDU session to the UE-PCF when receiving the URSP-related information associated with each PDU session from the UE.

Operations 511 to 513 are a procedure in which the AMF receives the URSP-associated information (e.g., the S-NSSAI and the CC matched in the EPC) about each PDU session included in the registration request message from the UE, and forwards the URSP-associated information about each PDU session to the second PGW-C/SMF (PGW-C/SMF#2) (or SMF), and the second PGW-C/SMF (PGW-C/SMF#2) (or SMF) reports the URSP-associated information about each PDU session to the second SM-PCF (SM-PCF#2).

In operation 511, the AMF may transmit a PDU session update request message including the URSP-associated information about each PDU session and information about the generated PDU session (or S-NSSAI (S-NSSAI#2) associated with the PDN connectivity) to the second PGW-C/SMF (PGW-C/SMF#2) (or SMF). When the UE triggers generation of the PDU session, based on the URSP rule, the URSP-associated information about each PDU session may include S-NSSAI and CC values included in the URSP rule that triggers the generation of the PDU session. This information may include a PDU session ID, S-NSSAI (S-NSSAI#1), and CC information. S-NSSAI#2 about the generated PDU session and S-NSSAI#1 included in the URSP-associated information about each session may have different information values.

In operation 512, the second PGW-C/SMF (PGW-C/SMF#2) (or SMF) may receive the URSP-associated information about each PDU session from the UE, and may report the URSP-associated information about each PDU session and the S-NSSAI (S-NSSAI#2) to the second SM-PCF (SM-PCF#2). According to an embodiment, in an SM policy control connection generation process between the second SM-PCF and the second PGW-C/SMF before operation 512, the second SM-PCF (SM-PCF#2) may configure a policy control request trigger (PCRT) for changing the URSP-associated information or an SM policy in URSP enforcement reporting for the second PGW-C/SMF, and may forward the PCRT to the second PGW-C/SMF (PGW-C/SMF#2).

In operation 513, the second SM-PCF (SM-PCF#2) may report the URSP-associated information about each PDU session and the S-NSSAI (S-NSSAI#2) to the UE-PCF.

According to an embodiment, operations 507 to 510 may be a procedure of transmitting a list of a plurality of PDU sessions at once, and operations 511 to 513 may be a procedure performed separately for each PDU session. According to an embodiment, operations 507 to 510 and operations 511 to 513 may be selectively performed.

In operation 514, the UE-PCF may identify the URSP-associated information about each PDU session received from the UE via the AMF or the URSP-associated information about the PDU session received from the SM-PCF. The UE-PCF may identify whether the URSP rule is consistent, based on the S-NSSAI (S-NSSAI#1) and the S-NSSAI (S-NSSAI#2). The UE-PCF may store a PSI for the UE in a UDR. The UE-PCF may store UE capability transmitted by the UE. Information that the UE-PCF stores for each UE in the UDR may include capability information about whether an EPC-5GC IWK UE is able to receive a URSP rule in the EPC network, information about whether the EPC-5GC IWK UE supports URSP enforcement reporting, or information about whether the UE is able to transmit S-NSSAI when connecting to a PDN in the EPC network.

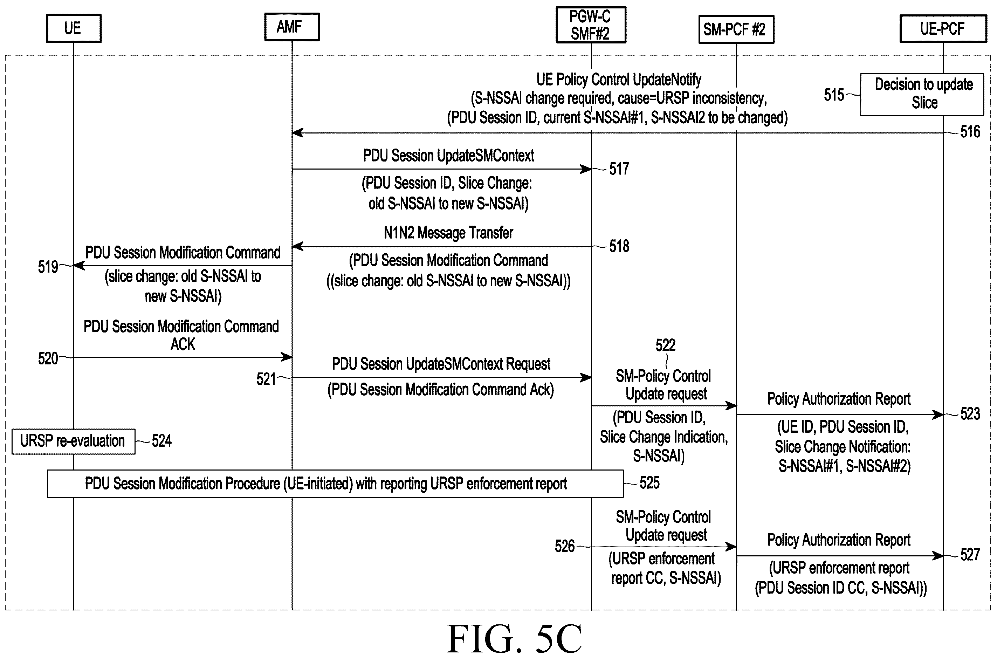

Referring to FIG. 5C, in operation 515, the UE-PCF may detect inconsistency in the URSP rule. The UE-PCF may determine that the URSP inconsistency is caused by the allocation of S-NSSAI. The UE-PCF may initiate a procedure for reallocating or reselecting a network slice.

In operation 516, the UE-PCF may transmit a request to trigger a procedure of updating a slice change policy configuration to the AMF. The UE-PCF may transmit a message including information reporting the URSP inconsistency to the AMF. The information reporting the URSP inconsistency may include information for identifying a PDU session of the UE that needs to be modified based on determination of URSP rule inconsistency.

According to an embodiment, the information for identifying the PDU session may include the following information.
- UE identifier (UE ID, group of UE IDs, any UE)
- PDU session identifier for individual UE identification
- URSP inconsistency report information: current S-NSSAI, S-NSSAI to be modified
- Suggestion for improving URSP inconsistency: Information about the PDU session for which the corresponding PDU session identifier needs to be changed, for example, the S-NSSAI to be modified and SSC mode

The AMF may receive a slice change request or URSP inconsistency report information from the UE-PCF, and may forward a PDU session modification request message to the SMF. The message transmitted by the AMF to the SMF is a message for requesting a change of a slice for an existing PDU session, and content included in the message may include the PDU session ID, the current S-NSSAI, the S-NSSAI to be modified, and a reason for requesting the change. The reason for requesting the change may include a UE-PCF policy, or may indicate a recovery from the URSP inconsistency.

In operation 517, the SMF receives the slice change request from the AMF, and may perform a PDU session modification procedure. The SMF may transmit a PDU session modification command to the UE. The PDU session modification command transmitted by the SMF to the UE may include an indication of changing S-NSSAI.

In operation 518, the AMF may receive the PDU session modification command message from the SMF, and may forward the same to the UE.

In operation 519, the UE may receive, from, the AMF the indication of changing the S-NSSAI included in the PDU session modification command message transmitted from the SMF, and may change the S-NSSAI. The S-NSSAI for the UE's session may be changed.

In operation 520, the UE may transmit a response message to the PDU session modification command. The AMF may forward a PDU session modification request to the SMF.

In operation 521, the SMF may receive the response to the PDU session modification command transmitted from the UE via the AMF. The SMF may successfully change the PDU session slice, and may report the slice change.

In operation 522, the SMF may report the slice change to the SM-PCF, and may report information including the changed S-NSSAI.

In operation 523, the SM-PCF may forward the report on the slice change to the UE-PCF. The report may include changed slice information, which is the S-NSSAI.

In operation 524, when the S-NSSAI for the PDU session is changed, the UE may detect that slice availability is changed, and may re-evaluate a URSP rule for applications associated with the S-NSSAI.

In operation 525, when the UE provides a URSP enforcement reporting function and performs URSP re-evaluation for the PDU session with the changed slice, the application may be associated with the same PDU session or associated with another PDU session as a result of the URSP re-evaluation. When the application is associated with another PDU session as a result of the URSP re-evaluation, the UE may forward URSP enforcement report information for the newly associated PDU session to the SMF in a PDU session modification request message. The URSP enforcement report information included in the PDU session modification request message may include a CC value matched to the URSP.

In operation 526, upon receiving the URSP enforcement report as a result of the URSP re-evaluation in the UE, the SMF may forward the URSP enforcement report to the SM-PCF.

In operation 527, when receiving a subscription request with respect to the URSP enforcement report from the UE-PCF, the SM-PCF may report the same to the UE-PCF.

In an embodiment, the operations (at least one of operations 506 to 514) illustrated in FIG. 5B may be performed after the operations (at least one of operations 422 to 432) illustrated in FIG. 4B. In another embodiment, the operations illustrated in FIG. 5A and FIG. 5B may be performed after the operations illustrated in FIG. 4A and FIG. 4B.

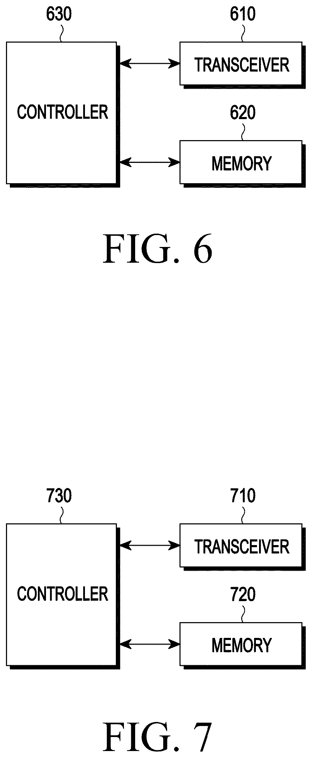

FIG. 6 is a block diagram illustrating a structure of a UE according to an embodiment of the disclosure.

The UE described with reference to FIG. 1 to FIG. 5B may correspond to the UE in FIG. 6. Referring to FIG. 6, the UE may include a transceiver 610, memory 620, and a controller 630. The transceiver 610, the controller 630, and the memory 620 of the UE may be operated according to the above-described communication methods of the UE. Components of the UE are not limited to the above-described example. For example, the UE may include a larger or smaller number of components than the above-described components. Furthermore, the transceiver 610, the controller 630, and the memory 620 may be implemented in the form of a single chip. In addition, the controller 630 may include one or more processors.

The transceiver 610 refers to a UE receiver and a UE transmitter as a whole, and may transmit/receive signals with base stations, network entities, servers, or other UEs. The signals transmitted/received with base stations, network entities, servers, or other UEs may include control information and data. To this end, the transceiver 610 may include an RF transmitter configured to up-convert and amplify the frequency of transmitted signals, an RF receiver configured to low-noise-amplify received signals and down-convert the frequency thereof, and the like. However, this is only an embodiment of the transceiver 610, and the components of the transceiver 610 are not limited to the RF transmitter and the RF receiver.

In addition, the transceiver 610 may receive signals through a radio channel, output the same to the controller 630, and transmit signals output from the controller 630 through the radio channel.

The memory 620 may store programs and data necessary for operations of the UE. In addition, the memory 620 may store control information or data included in signals acquired by the UE. The memory 620 may include storage media such as a ROM, a RAM, a hard disk, a CD-ROM, and a DVD, or a combination of storage media. Also, the memory 620 may not be a separate component but be a component included in the controller 630.

The controller 630 may control a series of processes so that the UE can operate according to the above-described embodiments of the disclosure.

FIG. 7 is a block diagram illustrating a structure of a network entity according to an embodiment of the disclosure.

The network entities described with reference to FIG. 1 to FIG. 5B may correspond to the network entity in FIG. 7. For example, the network entity in FIG. 7 may be implemented as one of the MME, S-GW, PGW-C/SMF, SM-PCF, UE-PCF, and BSF described in FIG. 1 to FIG. 5B.

Referring to FIG. 7, the network entity may include a transceiver 710, memory 720, and a controller 730. The transceiver 710, the controller 730, and the memory 720 of the network entity may be operated according to the above-described communication methods of the network entity. However, components of the server are not limited to the above-described example. For example, the network entity may include a larger or smaller number of components than the above-described components. Furthermore, the transceiver 710, the controller 730, and the memory 720 may be implemented in the form of a single chip. In addition, the controller 730 may include one or more processors.

The transceiver 710 refers to a network entity receiver and a network entity transmitter as a whole, and may transmit/receive signals with UEs or other network entities. The signals transmitted/received with UEs or other network entities may include control information and data. To this end, the transceiver 710 may include an RF transmitter configured to up-convert and amplify the frequency of transmitted signals, an RF receiver configured to low-noise-amplify received signals and down-convert the frequency thereof, and the like. However, this is only an embodiment of the transceiver 710, and the components of the transceiver 710 are not limited to the RF transmitter and the RF receiver.

In addition, the transceiver 710 may receive signals through a radio channel, output the same to the controller 730, and transmit signals output from the controller 730 through the radio channel.

The memory 720 may store programs and data necessary for operations of the network entity. In addition, the memory 720 may store control information or data included in signals acquired by the network entity. The memory 720 may include storage media such as a ROM, a RAM, a hard disk, a CD-ROM, and a DVD, or a combination of storage media. Also, the memory 720 may not be a separate component but be a component included in the controller 730.

The controller 730 may control a series of procedures so that the network entity can operate according to the aforementioned embodiments of the disclosure.

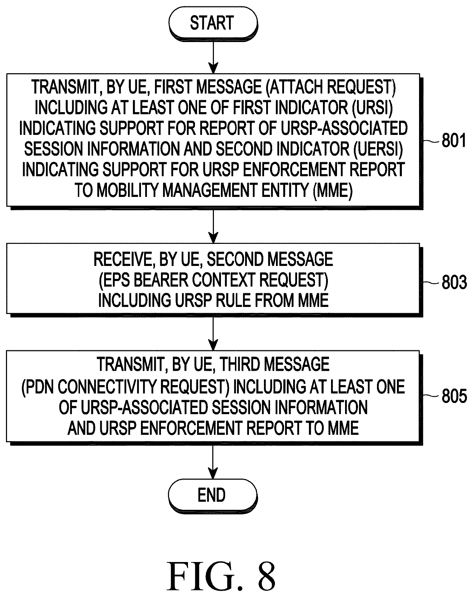

FIG. 8 is a flowchart illustrating the operation of a UE according to an embodiment of the disclosure.

The UE of FIG. 8 may be configured as the UE illustrated in FIG. 4A to FIG. 4C and/or the UE illustrated in FIG. 5A to FIG. 5C.

Referring to FIG. 8, in operation 801, the UE may transmit, to a mobility management entity (MME), a first message (attach request) including at least one of a first indicator (URSI) indicating support for a report of URSP-associated session information and a second indicator (UERSI) indicating support for a URSP enforcement report.

In operation 803, the UE may receive a second message (EPS bearer context request) including a URSP rule from the MME.

In operation 805, the UE may transmit a third message (PDN connectivity request) including at least one of the URSP-associated session information and the URSP enforcement report to the MME.

According to an embodiment, the URSP rule may be related to the UE connected to an evolved packet coreC (EPC), and may be generated to by a UE policy control function (UE-PCF).

According to an embodiment, the third message may further include a protocol data unit (PDU) session ID.

According to an embodiment, the URSP-associated session information may include single-network slice selection assistance information (S-NSSAI) supported by a 5GC. According to an embodiment, the URSP enforcement report may include connection capability (CC) information of the URSP.

According to an embodiment, a session generated based on the third message may be associated with a 5G PDU session parameter.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. An operation method of a user equipment (UE) based on a UE route selection policy (URSP) in a wireless communication system, the method comprising:
transmitting, to a mobility management entity (MME), a first message (attach request) comprising at least one of a first indicator (URSI) indicating support for a report of URSP-associated session information and a second indicator (UERSI) indicating support for a URSP enforcement report;
receiving, from the MME, a second message (EPS bearer context request) comprising a URSP rule; and
transmitting, to the MME, a third message (PDN connectivity request) comprising at least one of the URSP-associated session information and the URSP enforcement report.

2. The method of claim 1, wherein the URSP rule is related to the UE connected to an evolved packet coreC (EPC), and is generated by a UE policy control function (UE-PCF).

3. The method of claim 1, wherein the third message further comprises a protocol data unit (PDU) session ID.

4. The method of claim 1, wherein the URSP-associated session information comprises single-network slice selection assistance information (S-NSSAI) supported by a 5GC, and
wherein the URSP enforcement report comprises connection capability (CC) information of the URSP.

5. The method of claim 4, wherein a session generated based on the third message is associated with a 5G PDU session parameter.

6. An operation method of a network entity (PGW-C/SMF) in a wireless communication system, the method comprising:
receiving, from a serving gateway (S-GW), a first message (create session request) comprising at least one of a first indicator (URSI) indicating support for a report of UE route selection policy (URSP)-associated session information and a second indicator (UERSI) indicating support for a URSP enforcement report;
receiving, from the S-GW, a second message (create session request) comprising at least one of the URSP-associated session information and the URSP enforcement repot; and
transmitting, to the S-GW, a third message (create session response) comprising single-network slice selection assistance information (S-NSSAI).

7. The method of claim 6, further comprising associating a session with a 5GC protocol data unit (PDU) session parameter, based on at least one of subscriber information of a user equipment (UE), the URSP-associated session information, and the URSP enforcement report.

8. The method of claim 6, wherein the second message further comprises a protocol data unit (PDU) session ID.

9. The method of claim 6, wherein the URSP-associated session information comprises S-NSSAI supported by a 5GC, and
wherein the URSP enforcement report comprises connection capability (CC) information of a URSP.

10. The method of claim 6, further comprising:
transmitting, to a session management-policy control function (SM-PCF), a fourth message for session policy control, based on the second message; and
receiving, from the SM-PCF, a fifth message corresponding to the fourth message.

11. A user equipment (UE) based on a UE route selection policy (URSP) in a wireless communication system, the UE comprising:
a transceiver; and
a controller,
wherein the controller is configured to control to:
transmit, to a mobility management entity (MME), a first message (attach request) comprising at least one of a first indicator (URSI) indicating support for a report of URSP-associated session information and a second indicator (UERSI) indicating support for a URSP enforcement report;
receive, from the MME, a second message (EPS bearer context request) comprising a URSP rule; and
transmit, to the MME, a third message (PDN connectivity request) comprising at least one of the URSP-associated session information and the URSP enforcement report.

12. The UE of claim 11, wherein the URSP rule is related to the UE connected to an evolved packet coreC (EPC), and is generated by a UE policy control function (UE-PCF).

13. The UE of claim 11, wherein the third message further comprises a protocol data unit (PDU) session ID.

14. The UE of claim 11, wherein the URSP-associated session information comprises single-network slice selection assistance information (S-NSSAI) supported by a 5GC, and
wherein the URSP enforcement report comprises connection capability (CC) information of the URSP.

15. A network entity (PGW-C/SMF) in a wireless communication system, the network entity comprising:
a transceiver; and
a controller,
wherein the controller is configured to control to:
receive, from a serving gateway (S-GW), a first message (create session request) comprising at least one of a first indicator (URSI) indicating support for a report of UE route selection policy (URSP)-associated session information and a second indicator (UERSI) indicating support for a URSP enforcement report;
receive, from the S-GW, a second message (create session request) comprising at least one of the URSP-associated session information and the URSP enforcement repot; and
transmit, to the S-GW, a third message (create session response) comprising single-network slice selection assistance information (S-NSSAI).
